# EUROPÄISCHE PATENTSCHRIFT

(11) **EP 2 044 358 B1**
(45) Veröffentlichungstag und Bekanntmachung des Hinweises auf die Patenterteilung: **06.09.2017**
(21) Anmeldenummer: 07786243.1
(22) Anmeldetag: 21.07.2007
(51) Int. Cl.: A62C 2/06, F16L 5/04, H02G 3/22, F16L 59/16

(54) **WANDDURCHFÜHRUNG ZUM DURCHFÜHREN EINER LEITUNG DURCH EINE GEBÄUDEWANDUNG**
WALL LEADTHROUGH FOR LEADING A LINE THROUGH A BUILDING WALL
TRAVERSÉE MURALE POUR PASSER UNE CONDUITE À TRAVERS UNE PAROI DE BÂTIMENT

(30) Priorität: 25.07.2006 DE 202006011374 U
(43) Veröffentlichungstag der Anmeldung: 08.04.2009
(73) Patentinhaber: Rockwool International A/S, 2640 Hedehusene (DK)
(72) Erfinder: NOWOCZIN, Andreas, 46286 Dorsten (DE); KLOSE, Gerd-Rüdiger, 46286 Dorsten (DE)
(74) Vertreter: Rausch.Wanischeck.Brinkmann.Intellectual Property
(86) Internationale Anmeldenummer: PCT/EP2007/006496
(87) Internationale Veröffentlichungsnummer: WO 2008/012037

(56) Entgegenhaltungen:
- EP-A- 1 035 375
- EP-A- 1 522 800
- WO-A-2005/046016
- WO-A-2005/108843
- DE-A1- 3 737 416
- DE-A1- 3 819 229
- DE-U1- 20 103 110
- US-A- 438 507
- US-A- 1 895 420
- US-A- 3 864 909
- US-A- 4 509 561
- US-A- 4 807 669

## Beschreibung

Die vorliegende Erfindung betrifft eine Wanddurchführung für die Anordnung in einer zumindest eine Laibung ausbildenden Durchgangsöffnung einer Gebäudewandung, bestehend aus einem Dämmstoffelement und einer, einen Abschnitt mit erweitertem Außendurchmesser aufweisenden Leitung, wobei das Dämmstoffelement eine Dämmschale aus Mineralfasern aufweist, die die Leitung zumindest im Bereich der Durchgangsöffnung ummantelt und einen Hohlraum zur Aufnahme des Abschnitts mit erweitertem Außendurchmesser aufweist, wobei der Durchmesser des Dämmstoffelements im Wesentlichen dem Innendurchmesser der Durchgangsöffnung entspricht.

Aus dem Stand der Technik sind bereits diverse Wanddurchführungen der genannten Art bekannt, die als sogenannte Abschottungen ausgebildet sind, die ein Übergreifen von Rauch und/oder Feuer durch die Wanddurchführung verhindern. So offenbart beispielsweise die DE 199 05 103 A1 eine Vorrichtung zur abdichtenden Einfassung von Rohr- und Leitungssträngen in einer Mauer-und/oder Decken- bzw. Bodenöffnung eines Gebäudes. Diese Vorrichtung besteht aus einer den Rohr- und/oder Leitungsstrang ummantelnden Manschette, die bei Brandeinwirkung hitzeresistent und rauchdicht ist. Die Manschette ist als Rohrschale aus Mineralfasern ausgebildet, wobei die Rohrschale in Achsrichtung und in radialer Richtung flexibel ist und in ein die Mauer- und/oder Decken- bzw. Bodenöffnung verschließendes Schott eingesetzt ist, welches an der Mantelfläche der Manschette anschließt. Eine derartige Vorrichtung hat sich für die in dieser Druckschrift dargestellten Zwecke bewährt. Es hat sich allerdings als aufwendig gezeigt, daß der Bereich zwischen der Rohrschale und der Laibung der Wandung im Bereich der Öffnung gegebenenfalls durch aufwendige Baumaßnahmen geschlossen werden muß. Insbesondere sind hierbei Abschnitte notwendig, die nicht von einem Handwerker für das Verlegen der Leitungen ausgeführt werden können. Hierdurch entstehen zwei unterschiedliche Gewerke, die zu unterschiedlichen Zeitpunkten innerhalb des Gebäudes ausgeführt werden. Der Zeitunterschied für die Ausführung der Gewerke kann hierbei dazu führen, daß Beschädigungen an der Rohrschale entstehen, die anschließend mit der notwendigen Sorgfalt korrigiert werden.

Weiterhin ist aus der DE 298 04 351 U1 eine Vorrichtung zur Rohrabschottung bekannt. Diese vorbekannte Vorrichtung weist eine Schicht aus hitzebeständigem Material sowie wenigstens eine das Rohr umgebende Schicht zum Schallschutz auf. Hierbei handelt es sich um eine Schicht aus kunstharzgebundener Steinwolle, die in einer Mörtelfüllung innerhalb der Gebäudeöffnung angeordnet ist. Auch bei dieser Vorrichtung ist der Einbau der beiden Schichten in zwei unterschiedlichen Gewerken auszuführen, so daß die voranstehend dargestellten Unzulänglichkeiten auch hier auftreten.

Eine weitere Abschottung ist aus der DE 92 04 217 U1 bekannt. Diese Abschottung für eine in einer brandabschnittsbegrenzenden Wand vorgesehene Durchgangsöffnung für mindestens ein die Wand durchdringendes Element, vorzugsweise für eine Kabeltrasse, besteht aus einem Feuerhemmelement, vorzugsweise einer Mineralfaserplatte, das mindestens eine Durchgangsöffnung für das die Wand durchdringende Element aufweist. Bei dieser vorbekannten Abschottung ist vorgesehen, daß das Feuerhemmelement im Bereich des Umfangs des die Wand durchdringenden Elements verstärkt ist. Demzufolge besteht hier der Nachteil, daß der Bereich zwischen dem verstärkten Bereich und der Wand relativ schwach ausgebildet ist, so daß gegebenenfalls bei der Montage der Abschottung entstehende Beschädigungen unberücksichtigt bleiben, die bei einem späteren Brandfall dazu führen, daß die geforderte Abdichtung gegen Rauch nicht gegeben ist.

Ferner offenbart die DE 27 26 241 A1 eine feuersichere Kabel- und Rohrdurchführung aus nicht brennbarer gebundener Mineralfaser, wie beispielsweise Steinwolle, wobei ein Kabeldurchführungsrahmen vorgesehen ist, der beidseitig mit Mineralfasern verkleidet ist. Diese Ausgestaltung hat den Nachteil, daß auch hier eine Vielzahl von unterschiedlichen handwerklichen Arbeiten ausgeführt werden muß, die in der Regel nicht von einem Handwerker, sondern in Form von mehreren Gewerken erfolgen müssen.

Die DE 201 03 110 U1 beschreibt eine Abschottung einer Gebäudewandung in im wesentlichen senkrechter oder horizontaler Ausrichtung mit zumindest einer eine Laibung ausbildenden Durchgangsöffnung für die Durchführung zumindest einer die Wand durchdringenden Leitung für Energie- und/oder Informationsleiter, wobei die Leitung zumindest im Bereich der Durchgangsöffnung mit einer als Rohrschale aus Mineralfasern ausgebildeten Manschette ummantelt ist. Die Manschette schließt im wesentlichen unmittelbar an die Laibung der als Bohrung ausgebildeten Durchgangsöffnung an und verschließt die Durchgangsöffnung in radialer und axialer Richtung vollständig hitzeresistent und rauchdicht.

Die zuvor beschriebenen Wanddurchführungen eignen sich insbesondere zur Aufnahme von Leitungen mit kontinuierlichem Außendurchmesser. Häufig werden im Bereich der Wanddurchführung jedoch auch Leitungsabschnitte mit erweiterten Außendurchmessern angeordnet, wie beispielsweise Verbindungselemente, Rohrmuffen oder dergleichen. Um derartige Leitungsabschnitte mit erweitertem Außendurchmesser im Wanddurchführungsbereich vorsehen zu können, müssen übliche Rohrschalen mit hohem manuellen Aufwand angepaßt werden, damit in diesen der Leitungsabschnitt mit erweitertem Außendurchmesser aufnehmbar ist, oder diejenigen Bereiche, in denen der erweiterte Außendurchmesser aufgenommen wird, mit loser Stopfwolle ausgestopft werden.

Weiterhin ist aus der EP 1 035 375 A1 eine Schornsteindämmschale aus Mineralwolle bekannt, die als Isolierung für handelsübliche Abgasrohre dient. Diese handelsüblichen Abgasrohre weisen eine erweiterte Glockenmuffe auf, die für das Zusammenfügen benachbarter Rohrschüsse vorgesehen ist. Die Dämmschale weist bei ansonsten ungeänderter Außenkontur an einem ihrer Enden einen erweiterten Innenbereich auf, dessen Innendurchmesser zumindest dem Außendurchmesser der Muffe des zu isolierenden Abgasrohres entspricht. Die Dämmschale kann so mit ihrem Ende über eine solche Muffenverbindung geschoben werden, wobei sie im restlichen Bereich im Wesentlichen an dem Abgasrohr anliegt.

Die WO 2005/046016 A1 beschreibt eine Wanddurchführung mit einer Brandschutzvorrichtung zur Durchführung von Kabeln oder Rohren durch einen Durchbruch in einer Wand oder Decke. Es ist eine Aufgabe der vorliegenden Erfindung, eine Wanddurchführung der eingangs genannten Art zu schaffen, in der Leitungsabschnitte mit erweitertem Außendurchmesser aufnehmbar sind und die schnell und einfach mit einer optimierten Dämmung vorgesehen werden können.

Eine erste Lösung dieser Aufgabe sieht eine Wanddurchführung nach dem Oberbegriff des Anspruchs 1 vor, bei der die Dämmschale einen Dämmstoffbereich aufweist, der zumindest den Abschnitt mit erweitertem Außendurchmesser aufnimmt und derart flexibel ausgebildet ist, dass sich dieser Dämmstoffbereich an die Außenkontur des Abschnitts mit erweitertem Außendurchmesser anpasst und an dieser anliegt. Die abhängigen Ansprüche beziehen sich auf individuelle Ausgestaltungen der vorliegenden Erfindung.

Eine zweite Lösung dieser Aufgabe sieht eine Wanddurchführung nach dem Oberbegriff des Anspruchs 2 vor, bei der die Dämmschale einen Dämmschalenabschnitt mit einer Innenkontur aufweist, der der Außenkontur des aufzunehmenden Abschnitts mit erweitertem Außendurchmesser entspricht und formschlüssig an der Außenkontur des aufzunehmenden Abschnitts mit erweitertem Außendurchmesser anliegt.

Die Wanddurchführung gemäß der vorliegenden Erfindung dient zum Durchführen einer Leitung durch eine zumindest eine Laibung ausbildende Durchgangsöffnung einer Gebäudewandung mit im wesentlichen senkrechter oder horizontaler Ausrichtung. Bei der Leitung kann es sich beispielsweise um eine Rohrleitung, einen Energie- und/oder Informationsleiter oder dergleichen handeln. Die Leitung ist zumindest im Bereich der Durchgangsöffnung mit einem eine Dämmschale aufweisenden Dämmstoffelement ummantelt, dessen Außendurchmesser im wesentlichen dem Innendurchmesser der Durchgangsöffnung entspricht.

Die Dämmschale umfaßt erfindungsgemäß einen Hohlraum zur Aufnahme eines Leitungsabschnitts mit erweitertem Außendurchmesser, wie beispielsweise eine Rohrmuffe eines Muffenrohrs, ein separates Verbindungselement zum Verbinden von Rohren, ein Ventil oder dergleichen. In dieser Dämmschale kann der Leitungsabschnitt mit erweitertem Außendurchmesser einfach angeordnet werden, ohne daß zeit- und kostenintensive manuelle Abdämmarbeiten erforderlich sind.

Bevorzugt ist die Laibung der Durchgangsöffnung mit einer feuerfesten Schicht ausgekleidet, beispielsweise mit einer Mörtelschicht. Auf diese Weise läßt sich die Laibung sehr gleichmäßig gestalten, so daß das Dämmstoffelement zusammen mit der darin enthaltenen Leitung einfach in diese einsetzbar ist.

Das Dämmstoffelement weist vorteilhaft einen gegenüber dem Durchmesser der Durchgangsöffnung geringfügig größeren Außendurchmesser auf, so daß das Dämmstoffelement form- und/oder reibschlüssig in der Durchgangsöffnung gehalten ist. Hierbei bildet insbesondere der Reibschluß den Vorteil, daß die erforderliche Abdichtung zwischen der Laibung und dem Dämmstoffelement bereits aufgrund der in diesem Bereich auftretenden Reibkräfte erzielt werden kann.

Das Dämmstoffelement liegt bevorzugt dichtend an der Leitung an, so daß auch in diesem Bereich zusätzliche Abdichtungsmittel nicht angebracht werden müssen. Gegebenenfalls kann es von Vorteil sein, das Dämmstoffelement mit der Leitung über eine elastische Klebverbindung zu verbinden.

Die Stirnseite zumindest eines freien Endes des Dämmstoffelementes sowie die Stirnseite der in dem Dämmstoffelement angeordneten Leitung sind bevorzugt mit einer Dämmstoffscheibe abgedeckt, die vorteilhaft aufklappbar ausgebildet ist, so daß sich diese leicht anordnen läßt. Die Dämmstoffscheibe ist wiederum bevorzugt mit einem festen Formteil abgedeckt, das vorteilhaft streichfähig imprägniert ist. Auf diese Weise läßt sich stirnseitig ein rauch- und feuerfester Abschluß der Wanddurchführung realisieren.

Das Dämmstoffelement kann eine Länge aufweisen, die im wesentlichen mit der Länge der Durchgangsöffnung übereinstimmt. Auf diese Weise kann beidseitig der Wanddurchführung eine mit der Gebäudewandung plan abschließende Fläche erzeugt werden. Das Dämmstoffelement kann jedoch auch eine größere Länge als die Durchgangsöffnung aufweisen, so daß ein Dämmstoffelementabschnitt zumindest einseitig von der Durchgangsöffnung vorsteht. Um den vorstehenden Dämmstoffelementabschnitt werden vorteilhaft Formteile angeordnet, die den Dämmstoffelementabschnitt im wesentlichen bündig umschließen. Die Formteile bestehen bevorzugt aus einem stabilen, nicht brennbaren Material, beispielsweise Beton, Porenbeton, Sinterglas, Schaumglas oder dergleichen, so daß der vorstehende Dämmstoffelementabschnitt zusammen mit der in diesem gehaltenen Leitung durch die Formteile vor äußeren Beschädigungen geschützt wird. Die Formteile können miteinander und/oder mit der Gebäudewandung verklebt sein, um die Formteile zu fixieren. Die Verklebung kann auch feuerfest und rauchdicht ausgebildet werden, so daß eine Abdichtung der Wanddurchführung durch die Formteile erzielt wird.

Gemäß einer ersten Variante des Dämmstoffelementes entspricht eine Innenkontur des den Leitungsabschnitt mit erweitertem Außendurchmesser aufnehmenden Dämmschalenabschnitts im wesentlichen einer Außenkontur des aufzunehmenden Leitungsabschnitts und liegt im wesentlichen formschlüssig an der Außenkontur des in den Hohlraum aufgenommenen Leitungsabschnitts an. Dabei sind die Durchmesserbereiche der Innenkontur des den Leitungsabschnitt aufnehmenden Dämmschalenabschnifits bevorzugt geringfügig kleiner als die entsprechenden Außendurchmesserbereiche der Außenkontur des Leitungsabschnitts, so daß zwischen der Innenkontur des Dämmschalenabschnitts und der Außenkontur des in diesen aufgenommenen Leitungsabschnitts ein die Dämmwirkung verbessernder Anpreßdruck erzeugt wird. Die Innenkontur des Dämmschalenabschnitts kann dabei beispielsweise durch ein spanabhebendes Verfahren erzeugt werden.

Die Rohdichte des Dämmstoffs beträgt vorteilhaft zumindest 80 kg/m³, so daß dieser relativ fest, wenngleich prinzipiell flexibel ist. Ferner weist der Dämmstoff bevorzugt organische Bindemittel mit einem Gehalt von zumindest 1 % Trockenmasse bezogen auf den Dämmstoff auf.

Die Gehalte an organischen duroplastisch aushärtenden Harzen liegen bevorzugt zwischen 0,8 Masse-% und 1,2 Masse-%. Die Dämmschale wird dadurch weicher und kann entsprechend enger an die Oberfläche des zu dämmenden Objekts angepreßt werden. Bei Verwendung von spröd-harten anorganischen Bindemitteln, wie beispielsweise organisch modifizierten Silanen, wird deren Anteil auf die jeweilige Rohdichte abgestimmt, um einerseits feste, aber noch flexible Dämmstoffe mit ausreichend anpassungsfähigen Oberflächen zu generieren.

Der Außenumfang der Dämmschale ist bevorzugt mit einer ein- oder mehrlagigen Schutzschicht umgeben. Die Schutzschicht kann beispielsweise wasserdampfbremsende oder -sperrende Metallfolien aufweisen. Auch kann sie Kunststofffolien umfassen, um die Außenseite des Dämmstoffelementes gegen die Angriffe der in feuchten Klebern oder feuchten Mörteln wirksamen Alkalien zu schützen. Glasfasergittergewebe oder dergleichen können als Bewehrung dienen, um das Dämmstoffelement vor äußeren mechanischen Einflüssen zu schützen.

Gemäß einer weiteren Variante des Därmmstoffelementes ist ein Dämmstoffbereich der Dämmstoffschale zumindest in dem den Leitungsabschnitt mit erweitertem Außendurchmesser aufnehmenden Dämmschalenabschnitt derart flexibel ausgebildet, daß sich dieser an eine Außenkontur des in dem Hohlraum der Dämmschale angeordneten Leitungsabschnitt anpaßt und dieser mit einem Anpreßdruck anliegt. Im Gegensatz zu der zuvor beschriebenen Variante ist die Innenkontur des den Leitungsabschnitt mit erweitertem Außendurchmesser aufnehmenden Dämmschalenabschnitts also nicht entsprechend der Außenkontur des Leitungsabschnitts vorgeformt, sondern der Dämmstoffbereich der Dämmschale ist derart elastisch ausgebildet, daß sich seine Innenkontur erst beim Einlegen eines Leitungsabschnitts an dessen Außenkontur anpaßt, wodurch eine kraftschlüssige und im wesentlichen formschlüssige Aufnahme des Rohrieitungsabschnitts erzeugt wird. Auch diese Variante ermöglicht ein wenig zeit- und kostenintensives dämmen des Leitungsabschnitts mit erweitertem Außendurchmesser.

Um die Flexibilität des den Leitungsabschnitt im bestimmungsgemäß eingesetzten Zustand umgebenden Dämmstoffbereichs der Dämmschale zu erhöhen, kann dieser gewalkt sein, wodurch die Festigkeit deutlich herabgesetzt wird.

Ferner umfaßt der Dämmstoffbereich vorteilhaft Mineralfasern, die im wesentlichen parallel zur Längsachse des bestimmungsgemäß aufgenommenen Leitungsabschnitts verlaufend ausgerichtet sind, wodurch die Verformbarkeit in axialer Richtung des Dämmstoffbereichs verbessert wird, so daß sich dieser besser an den aufzunehmenden Leitungsabschnitt anlegen kann.

Zudem oder alternativ kann der besagte Dämmstoffbereich wenigstens einen sich radial erstreckenden Einschnitt aufweisen. Durch Einbringen von konzentrischen Schlitzen oder sonstigen Ausnehmungen in die Innenwandung des den Leitungsabschnitt mit erweitertem Außendurchmesser aufnehmenden Dämmstoffbereichs der Dämmschale wird ebenfalls die Flexibilität erhöht. Die maximale Breite der Schlitze bzw. Ausnehmungen beträgt dabei bevorzugt 3 mm, besser noch 1,5 mm bis 2 mm. Die Abstände der Schlitze bzw. Ausnehmungen sind abhängig von der Außenkontur des Leitungsabschnitts. Bei abrupten Änderungen des Querschnitts sind sie enger zueinander angeordnet und tiefer anzulegen, als bei allmählichen Übergängen. Durch das Einschneiden bzw. Einschlitzen können die dadurch zumeist gebildeten ringförmigen Segmente unabhängig auf die Art und Größe der Verformung reagieren, damit letztlich zumindest größtenteils eine formschlüssige Verbindung mit dem zu dämmenden Objekt entsteht. Die Flexibilität des Dämmstoffs wird gegebenenfalls noch dadurch erhöht, daß dieser Bereich vorzugsweise nach dem Anlegen der Schlitze in radialer Richtung gedrückt bzw. gewalkt wird, was dort die Festigkeit des Dämmstoffs vermindert und seine Flexibilität erhöht, wie bereits zuvor beschrieben.

Ferner kann der den Leitungsabschnitt mit erweitertem Außendurchmesser aufnehmende Dämmstoffbereich der Dämmschale aus mehreren ringförmigen, in axialer Richtung nebeneinander angeordneten Segmenten ausgebildet sein, die einen unterschiedlichen Innendurchmesser aufweisen können. Die Rohdichten, die Bindemittel der einzelnen Segmente und somit deren Festigkeiten können unterschiedlich hoch sein. Die einzelnen Segmente können vorgewalkt sein. Um einen sicheren Anschluß an das freie Ende eines Rohrleitungsabschnitts zu erreichen, sollte zumindest das abschließende Segment dessen Außendurchmesser aufweisen.

Bevorzugt ist die Dämmschale in einem Hohlraum einer äußeren, einen Dämmstoff aufweisenden Schutzschale angeordnet, deren Außenumfang wiederum mit einer ein- oder mehrlagigen Schutzschicht umgeben sein kann, wie es zuvor bereits beschrieben wurde. Vorzugsweise besteht der Dämmstoff aus mit Bindemitteln gebundenen Mineralfasern, insbesondere Steinwolle.

Der Dämmstoff der äußeren Schutzschale weist bevorzugt höhere Gehalte an organischem Bindemittel als der Dämmstoff der den Leitungsabschnitt mit vergrößertem Außendurchmesser aufnehmenden Dämmschale auf, wodurch die äußere Schutzschale eine höhere Festigkeit als die Dämmschale erhält. Aus dem gleichen Grund weist der Dämmstoff der äußeren Schutzschale auch bevorzugt eine höhere Rohdichte als die Dämmschale auf. Die Mineralfasern der äußeren Schutzschale sind bevorzugt in radialer Richtung des Dämmstoffelementes angeordnet, wodurch die Festigkeit in dieser Richtung und somit der Schutz der Dämmschale vor äußeren mechanischen Einflüssen verbessert wird.

Um ein Aufklappen von Spalten zwischen der äußeren Schutzschale und der den Leitungsabschnitt mit erweitertem Außendurchmesser aufnehmenden Dämmschale zu verhindern, die einen Durchgang von Rauchgasen ermöglichen würden, werden diese bevorzugt aneinander befestigt. Die Befestigung erfolgt vorteilhaft mittels Klebstoff, vorzugsweise mit einem gefüllten anorganischen Kleber, beispielsweise auf Basis von Wassergläsern. Der Klebstoff kann vollflächig oder ringförmig, beispielsweise in konzentrischen Ringen an axial voneinander beabstandeten Stellen aufgetragen werden. Die Verklebung der Schutzschale und der Dämmschale erleichtert naturgemäß auch das exakte Umlegen des Dämmstoffelementes um das zu dämmende Objekt.

Vorteilhaft steht entweder die äußere Schutzschale in axialer Richtung des aufzunehmenden Leitungsabschnitts über die den Leitungsabschnitt aufnehmende Dämmschale vor oder die Dämmschale steht in axialer Richtung des aufzunehmenden Leitungsabschnitts über die äußere Schutzschale vor, um eine Art Labyrinthdichtung mit einem entsprechend gestalteten Anschlußelement zu bilden.

Schließlich sind die den Leitungsabschnitt aufnehmende Dämmschale und/oder die äußere Schutzschale vorteilhaft aufklappbar ausgebildet, so daß das Dämmstoffelement quer zu seiner Axialrichtung über den Leitungsabschnitt geschoben werden kann. Dazu kann die oder können die das Dämmstoffelement bildenden Schalen auf der einen Seite auf- und auf der gegenüberliegenden Seite eingeschnitten sein, so daß das Dämmstoffelement in Richtung der eingeschnittenen Seite aufgeklappt werden kann. Alternativ kann das Dämmstoffelement natürlich auch mehrteilig ausgebildet sein, beispielsweise zweiteilig.

Nachfolgend wird die vorliegende Erfindung unter Bezugnahme auf die beiliegende Zeichnung genauer beschrieben. Darin ist:
- Fig. 1a: eine Längsschnittansicht einer ersten Ausführungsform eines Dämmstoffelementes mit aufgenommenem Muffenrohr zur Ausbildung einer Wanddurchführung;
- Fig. 1b: eine Längsschnittansicht einer zweiten Ausführungsform eines Dämmstoffelementes mit aufgenommenem Muffenrohr zur Ausbildung einer Wanddurchführung;
- Fig. 2a: eine Längsschnittansicht einer ersten Ausführungsform einer zweiten Variante eines Dämmstoffelementes ohne Muffenrohr zur Ausbildung einer Wanddurchführung;
- Fig. 2b: eine Längsschnittansicht einer zweiten Ausführungsform einer zweiten Variante eines Dämmstoffelementes ohne Muffenrohr zum Ausbilden einer Wanddurchführung;
- Fig. 3a: eine Längsschnittansicht einer dritten Ausführungsform einer zweiten Variante eines Dämmstoffelementes ohne Muffenrohr zur Ausbildung einer Wanddurchführung;
- Fig. 3b: eine Längsschnittansicht einer vierten Ausführungsform einer zweiten Variante eines Dämmstoffelementes ohne Muffenrohr zur Ausbildung einer Wanddurchführung;
- Fig. 4a: eine Querschnittansicht eines Dämmstoffelementes zur Ausbildung einer Wanddurchführung;
- Fig. 4b: eine Querschnittansicht eines alternativen Dämmstoffelementes zur Ausbildung einer Wanddurchführung;
- Fig. 5a: eine Längsschnittansicht einer fünften Ausführungsform einer zweiten Variante eines Dämmstoffelementes ohne Muffenrohr zur Ausbildung einer Wanddurchführung;
- Fig. 5b: eine Längsschnittansicht einer alternativen Ausführungsform einer zweiten Variante eins Dämmstoffelementes ohne Muffenrohr zur Ausbildung einer Wanddurchführung;
- Fig. 6: eine Schnittansicht einer ersten Ausführungsform einer erfindungsgemäßen Wanddurchführung und
- Fig. 7: eine Schnittansicht einer zweiten Ausführungsform einer erfindungsgemäßen Wanddurchführung.

Gleiche Bezugsziffern beziehen sich nachfolgend auf gleichartige Bauteile.

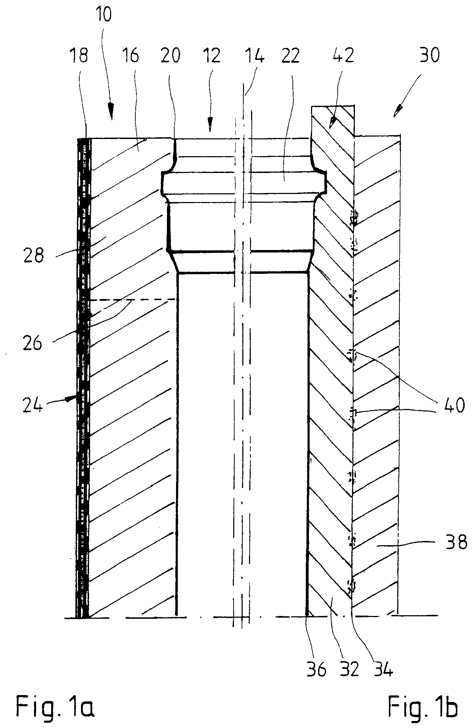

Fig. 1 a ist eine Längsschnittansicht und zeigt eine erste Ausführungsform einer ersten Variante eines aufklappbaren Dämmstoffelementes 10, in das ein handelsübliches Muffenrohr 12 eingesetzt ist. Der Aufbau des Dämmstoffelementes 10 und des Muffenrohrs 12 ist jeweils rotationssymmetrisch, weshalb in Fig. 1a der Einfachheit halber lediglich die Hälfte links der Symmetrieachse 14 dargestellt ist.

Das Dämmstoffelement 10 umfaßt eine hohlzylindrische Dämmschale 16 mit einer zylindrischen Außenfläche 18 und einer im wesentlichen zylindrischen Innenfläche 20, wobei letztere einen Hohlraum zur Aufnahme des Muffenrohrs 12 definiert. Die Innenfläche 20 der Dämmschale 16 ist in dem eine Rohrmuffe 22 des Muffenrohrs 12 aufnehmenden Dämmschalenabschnitt unter Berücksichtigung der zulässigen Grenzabmaße des zu dämmenden Muffenrohrs 12 derart konturiert, daß sie sich formschlüssig an diese anpressen läßt. Die Rohrmuffe 22 stellt bei der vorliegenden Ausführungsform den Rohrleitungsabschnitt mit erweitertem Außendurchmesser dar. Die Konturierung der Innenfläche 20 der Dämmschale 16 erfolgt durch einen entsprechenden Abtrag des überflüssigen Materials, beispielsweise unter Verwendung eines spanabhebenden Verfahrens. Die Mindest-Rohdichte des die Dämmschale 16 bildenden Dämmstoffs beträgt 80 kg/m³. Der Gehalt an organischen Bindemitteln z. B. den üblicherweise verwendeten Gemischen aus Phenol-, Formaldehyd-, Harnstoffharzen ist zumindest 1 % Trockenmasse bezogen auf den Dämmstoff. Die Außenfläche 18 der Dämmschale 16 ist mit einer aufgeklebten, mehrlagigen, folienartigen Schutzschicht 24 versehen, beispielsweise mit einer fünflagigen Schutzschicht, die von außen nach innen aus Schichten PE-Folie, Metall-Folie, PE-Folie und Glasfasergittergewebe, Metall-Folie, PE-Folie bestehen kann. Die Metall-Folie hat dabei insbesondere Wasserdampf bremsende oder sperrende Wirkung. Die PE-Folien schützen gegen die Angriffe der in feuchten Klebern oder feuchten Mörteln wirksamen Alkalien. Das in die PE-Schicht eingebettete Glasfasergittergewebe dient prinzipiell zur Bewehrung der Ummantelung zum Schutz vor äußeren mechanischen Einflüssen. Die Metall-Folien bestehen vorwiegend bevorzugt aus Aluminium.

Als Alternative ist in Fig. 1 a mittels der gestrichelten Linie 26 ein kurzes Formstück 28 angedeutet, das nur den unmittelbaren, die Rohrmuffe 22 des Muffenrohrs 12 umgebenden Abschnitt der Dämmschale 16 erfaßt.

Fig. 1b ist eine Längsschnittansicht einer weiteren Ausführungsform der ersten Variante eines Dämmstoffelementes 30, in das ein herkömmliches Muffenrohr 12 eingesetzt ist. Das Dämmstoffelement 30 und das Muffenrohr 12 weisen jeweils einen rotationssymmetrischen Aufbau auf, weshalb in Fig. 1b der Einfachheit halber nur die Hälfte rechts der Symmetrieachse 14 dargestellt ist.

Das Dämmstoffelement 30 umfaßt eine innere hohlzylindrische Dämmschale 32 mit einer zylindrischen Außenfläche 34 und einer im wesentlichen zylindrischen Innenfläche 36, wobei letztere in dem die Rohrmuffe 22 des Muffenrohrs 12 aufnehmenden Dämmschalenabschnitt unter Berücksichtigung der zulässigen Grenzabmaße des zu dämmenden Muffenrohrs 12 derart konturiert ist, daß zwischen der Innenfläche 36 und der Außenkontur der Rohrmuffe 22 eine formschlüssige Verbindung erzeugt wird. Um die Außenfläche 34 der inneren Dämmschale 32 ist eine hohlzylindrische äußere Schutzschale 38 angeordnet, wobei die Außenfläche 34 der Dämmschale 32 und die Innenfläche der äußeren Schutzschale 38 einander berühren und vorzugsweise mit einem gefüllten anorganischen Klebstoff, beispielsweise auf Basis von Wassergläsern, miteinander verbunden sind. Der Kleber kann vollflächig aufgetragen werden. Gemäß Fig. 1 b ist er jedoch partiell ringförmig in konzentrischen Ringen aufgetragen, was durch die Klebeverbindungen 40 angedeutet ist. Die Verklebung der Dämmschale 32 und der äußeren Schutzschale 38 erleichtert naturgemäß auch das exakte Umlegen des Dämmstoffelementes 30 um das Muffenrohr 12.

Die äußere Schutzschale 38 dient primär dem mechanischen Schutz der Dämmschale 32 und kann deshalb eine höhere Rohdichte, insbesondere auch höhere Gehalte an organischen Binde- und sonstigen Zusatzmitteln enthalten. Die äußere Schutzschale 38 des Dämmstoffelementes 30 kann, ähnlich wie in Fig. 1a gezeigt, durch aufgeklebte oder aufgespannte Umhüllungen aus Blechen oder Folien geschützt sein. Weiterhin können an und für sich bekannte Gewebe aus Glasfasern oder Synthesefasern wie Carbon- oder Aramitfasern, die gegebenenfalls mit intumeszenten Massen getränkt sind, mit der Dämmschale 32 und/oder der Schutzschale 38 verbunden sein.

Die Dämmschale 32 kann eine von der äußeren Schutzschale 38 abweichende Rohdichte aufweisen. Vorzugsweise ist diese gleich oder geringer als die der äußeren Schutzschale 38, wenn der Gehalt an organischen Bindemitteln mindestens ca. 30 - 50 % geringer ist. Die Gehalte an organischen duroplastisch aushärtenden Harzen können bis auf ca. 0,8 bis 1,2 Masse-% abgesenkt werden. Der Dämmstoff der Dämmschale 32 wird dadurch weicher und kann dadurch enger an die Oberfläche des Muffenrohrs 12 angepreßt werden. Bei Verwendung von spröd-harten anorganischen Bindemitteln, wie beispielsweise organisch modifizierten Silanen, wird deren Anteil auf die jeweilige Rohdichte abgestimmt, um einerseits feste aber noch flexible Dämmstoffe mit ausreichend anpassungsfähigen Oberflächen zu generieren.

Die Dämmschale 32, die das Muffenrohr 12 aufnimmt, kann in axialer Richtung des aufzunehmenden Muffenrohrs 12 über die äußere Schutzschale 38 vorstehen, wie es durch den vorstehenden Abschnitt 42 der Dämmschale 32 angedeutet ist. Auf diese Weise kann eine Art Labyrinthdichtung mit einem entsprechend gestalteten Anschlußelement ausgebildet werden. Alternativ kann natürlich auch ein Abschnitt der äußeren Schutzschale 38 axial über die Dämmschale 32 vorstehen.

Die Dämmschale 32 und die äußere Schutzschale 38 sowie das Muffenrohr 12 können einfach ineinander gelegt werden. Da die üblicherweise verwendeten Gemische aus Phenol-, Formaldehyd- und Harnstoffharz bei höheren Rohdichten und bei anhaltend höheren Temperaturen zu Oxidationsreaktionen mit entsprechender Energiefreisetzung neigen, kann die ohnehin dem Brandangriff ausgesetzte äußere Schutzschale 38 stärker sintern als die innere. Die Klebeverbindungen 40 verhindern dabei ein Aufklappen von Spalten zwischen der Außenfläche 34 der Dämmschale 32 und der Innenfläche der äußeren Schutzschale 38.

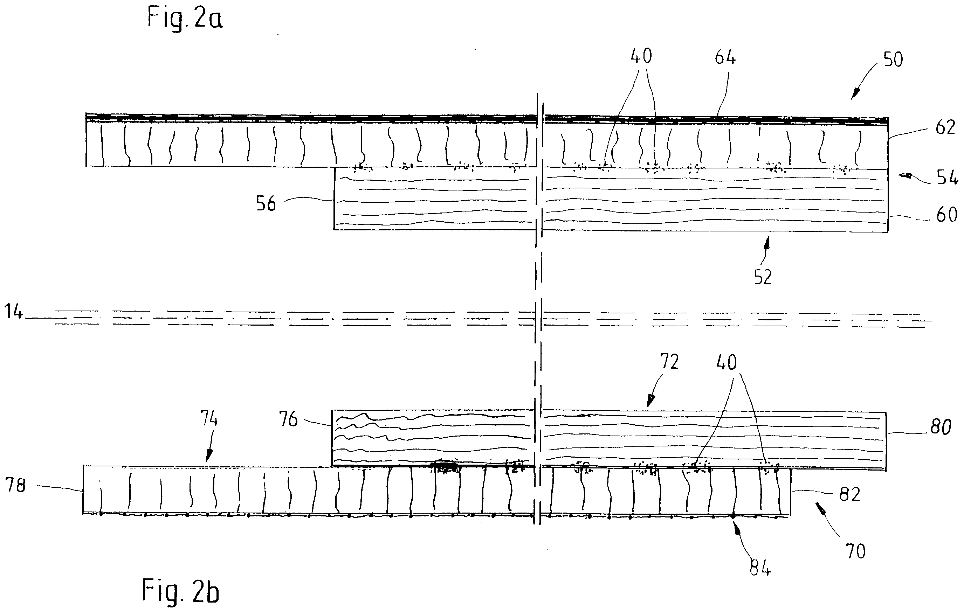

Fig. 2a ist eine Längsschnittansicht einer ersten Ausführungsform einer zweiten Variante eines Dämmstoffelementes 50 zur Aufnahme geometrisch einfach geformter Muffenrohre. Das Dämmstoffelement 50 ist rotationssymmetrisch aufgebaut, weshalb in Fig. 2a der Einfachheit halber nur eine Hälfte bis zur Symmetrieachse 14 dargestellt ist. Das Dämmstoffelement 50 umfaßt eine Dämmstoff aufweisende, hohlzylindrische innere Dämmschale 52 und eine Dämmstoff aufweisende, hohlzylindrische äußere Schutzschale 54. Die den Außenumfang der Dämmschale 52 bildende Fläche und die den Innenumfang der äußeren Schutzschale 54 bildende Fläche sind über Klebeverbindungen 40 aneinander befestigt. Die Klebeverbindungen 40 sind ringförmig ausgebildet und axial voneinander beabstandet. Als Klebstoff wird bevorzugt anorganischer Klebstoff verwendet. Die Dämmschale 52 weist eine geringere Länge als die äußere Schutzschale 54 auf, so daß ein freies Ende 56 der Dämmschale 52 gegenüber dem entsprechenden freien Ende 58 der äußeren Schutzschale 54 zurückspringt, wodurch ein Aufnahmeraum für eine Rohrmuffe entsteht. Das freie Ende 56 der Dämmschale 52, das als Übergang vom Rohr zur Rohrmuffe des Muffenrohrs dient, kann wahlweise gerade, wie in Fig. 2a gezeigt, oder leicht abgeschrägt ausgebildet sein. Die anderen freien Enden 60 und 62 der Dämmschale 52 und der äußeren Schutzschale 54 schließen hingegen bündig miteinander ab.

Die Dämmstoffe der Dämmschale 52 und der äußeren Schutzschale 54 können denjenigen der entsprechenden inneren Schale 32 und der entsprechenden äußeren Schutzschale 38 der in Fig. 1b dargestellten Ausführungsform entsprechen, wobei die Rohdichte des Dämmstoffs der äußeren Schutzschale 54 ohne nichtfaserige Bestandteile bevorzugt größer als 80 kg/m³ ist.

Die äußere Schutzschale 54 kann mit einer Schutzschicht 64 versehen sein, die vorliegend einen dreilagigen Aufbau mit, von außen nach innen betrachtet, einer Polyethylen-Folie, einer Aluminium-Folie und wiederum einer Polyethylen-Folie aufweist. Die Schutzschicht 64 kann wahlweise natürlich auch einen anderen Aufbau aufweisen.

Ferner ist in Fig. 2a die Ausrichtung der die Dämmschale 52 und die äußere Schutzschale 54 bildenden Mineralfasern angedeutet. Die Mineralfasern der Dämmschale 52 erstrecken sich im wesentlichen in Längsrichtung des Dämmstoffelements 50, also längs zu dem aufzunehmenden Muffenrohr bzw. zu der aufzunehmenden Rohrmuffe, wodurch die Verformbarkeit der Dämmschale 52 und somit das Anlegen der Dämmschale 52 an die Außenkontur des Rohrleitungsabschnitts verbessert wird. Die Mineralfasern der äußeren Schutzschale 54 erstrecken sich hingegen im wesentlichen radial, also quer zu dem aufzunehmenden Muffenrohr bzw. zu der aufzunehmenden Rohrmuffe, wodurch in radialer Richtung eine erhöhte Festigkeit der äußeren Schutzschale 54 und somit ein guter Schutz vor äußeren Einflüssen erzeugt wird.

Fig. 2b ist eine Längsschnittansicht einer weiteren Ausführungsform eines Dämmstoffelementes 70. Das Dämmstoffelement 70 umfaßt eine einen Dämmstoff aufweisende, hohlzylindrische innere Dämmschale 72 zur Aufnahme eines Muffenrohrs und eine einen Dämmstoff aufweisende, hohlzylindrische äußere Schutzschale 74, wobei die Dämmschale 72 und die äußere Schutzschale 74, ähnlich wie bei den in den Fign. 1b und 2a gezeigten Ausführungsformen, über Klebeverbindungen 40 aneinander befestigt sind. Ein der Rohrmuffe zugewandtes freies Ende 76 der Dämmschale 72 ist gegenüber einem freien Ende 78 der äußeren Schutzschale 74 zurückgesetzt angeordnet, wodurch ein Freiraum zur Aufnahme der Rohrmuffe gebildet ist. Das freie Ende 76 der Dämmschale 72, das im Übergangsbereich vom Rohr zur Rohrmuffe des Muffenrohrs angeordnet ist, ist stark gedrückt, d. h. gewalkt worden, was die Festigkeit deutlich herabgesetzt hat. Das freie Ende 76 der Dämmschale ist nicht mehr mit der äußeren Schutzschale 74 verklebt, so daß die Dämmschale 72 formschlüssig an den Erweiterungsbereich der Rohrmuffe angepreßt werden kann. Das andere freie Ende 80 der Dämmschale 72 steht über das entsprechende freie Ende 82 der äußeren Schutzschale 74 vor, um eine Art Labyrinthdichtung mit einem entsprechend gestalteten Anschlußelement auszubilden.

Die äußere Oberfläche der äußeren Schutzschale 74 ist mit einer Imprägnierung 84 versehen, bei der es sich beispielsweise um einen Silikat-Kleber, um Silikat-Dispersion-Systeme, um Klebemörtel oder dergleichen handeln kann, um einen kraftschlüssigen Verbund zu dem Einbettmörtel im Bereich von Wanddurchführungen zu erzielen. Diese Imprägnierung 84 kann durch Glasfasergittergewebe oder Glasfaserwirrvliese verstärkt sein.

Ferner ist auch in Fig. 2b die Ausrichtung der die Dämmschale 72 und die äußere Schutzschale 74 bildenden Mineralfasern angedeutet. Die Mineralfasern der Dämmschale 72 erstrecken sich im wesentlichen in Längsrichtung des Dämmstoffelements 70, also längs zu dem aufzunehmenden Muffenrohr bzw. zu der aufzunehmenden Rohrmuffe, wodurch die Verformbarkeit der Dämmschale 72 und somit das Anlegen der Dämmschale 72 an die Außenkontur des Rohrleitungsabschnitts verbessert wird. Die Mineralfasern der äußeren Schutzschale 74 erstrecken sich hingegen im wesentlichen radial, also quer zu dem aufzunehmenden Muffenrohr bzw. zu der aufzunehmenden Rohrmuffe, wodurch in radialer Richtung eine erhöhte Festigkeit der äußeren Schutzschale 74 und somit ein guter Schutz vor äußeren Einflüssen erzeugt wird.

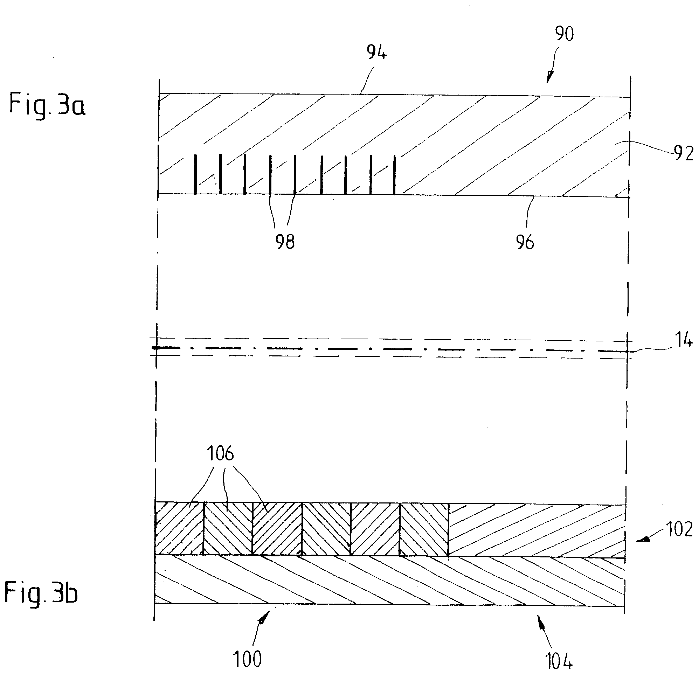

Fig. 3 zeigt eine Längsschnittansicht einer weiteren Ausführungsform eines Dämmstoffelementes 90, das einen rotationssymmetrischen Aufbau aufweist, weshalb in Fig. 3a der Einfachheit halber nur eine Hälfte des Dämmstoffelementes 90 bis zur Symmetrielinie 14 dargestellt ist. Das Dämmstoffelement 90 umfaßt eine Dämmstoff aufweisende, im wesentlichen hohlzylindrische Dämmschale 92 mit einer zylindrischen Außenfläche 94 und einer zylindrischen Innenfläche 96. An der Innenfläche 96 sind in dem die Rohrmuffe aufnehmenden Dämmstoffbereich der Dämmschale 92 konzentrische Einschnitte.

Schlitze oder sonstige Ausnehmungen 98 vorgesehen. Die maximale Breite der Schlitze beträgt 3 mm, besser jedoch 1,5 bis 2 mm. Die Abstände der Schlitze in axialer Richtung sind abhängig von der Außenkontur der Rohrmuffe. Bei abrupten Änderungen des Querschnitts sind sie enger zueinander anzuordnen und tiefer anzulegen als bei allmählichen Übergängen. Durch das Einschneiden bzw. Einschlitzen können die dadurch zumeist gebildeten ringförmigen Elemente unabhängig auf die Art und Größe der Verformung reagieren, damit letztlich eine im wesentlichen formschlüssige Verbindung mit dem zu dämmenden Objekt entsteht. Die Flexibilität des Dämmstoffs der Dämmschale 92 wird gegebenenfalls dadurch erhöht, daß der die Rohrmuffe aufnehmende Abschnitt vorzugsweise nach dem Anlegen der Schlitze in radialer Richtung gedrückt bzw. gewalkt wird, was dort die Festigkeit des Dämmstoffs vermindert und seine Flexibilität erhöht. Die in Fig. 3a dargestellte Ausführungsform weist den Vorteil auf, daß in diesem Dämmstoffelement 90 eine Vielzahl unterschiedlicher Rohrmuffen aufgenommen werden können, also unterschiedlich große und unterschiedlich geformte Rohrmuffen.

Fig. 3b ist eine Längsschnittansicht eines Dämmstoffelementes 100, die wiederum eine hohlzylindrische innere Dämmschale 102 und eine die Dämmschale 102 umgebende hohlzylindrische äußere Schutzschale 104 aufweist, wobei die Dämmschale 102 mit der äußeren Schutzschale 104 beispielsweise mittels Klebstoff verbunden sein kann, was in Fig. 3b jedoch nicht näher gezeigt ist. Die Dämmschale 102 und die äußere Schutzschale 104 weisen jeweils einen rotationssymmetrischen Aufbau auf, weshalb in Fig. 3b der Einfachheit halber nur eine Hälfte des Dämmstoffelementes 100 bis zur Symmetrielinie 14 gezeigt ist.

Die in Fig. 3b dargestellte Ausführungsform zeichnet sich dadurch aus, daß die Dämmschale 102 in dem die Rohrmuffe aufnehmenden Abschnitt nebeneinander angeordnete Dämmstoffscheiben 106 umfaßt, die einen einheitlichen Innendurchmesser aufweisen. Die Fasern in diesen Dämmstoffscheiben 106 können radialstrahlig oder überwiegend konzentrisch angeordnet sein. Durch die Anordnung von Dämmstoffscheiben 106 in dem die Rohrmuffe aufnehmenden Dämmstoffbereich der Dämmschale 102 wird ebenfalls die Flexibilität erhöht, so daß die Rohrmuffe formschlüssig in der Dämmschale 102 aufgenommen wird. Die Dämmstoffscheiben 106 können gegebenenfalls vorgedrückt bzw. gewalkt sein, wodurch die Flexibilität des die Rohrmuffe aufnehmenden Dämmstoffbereichs weiter erhöht wird.

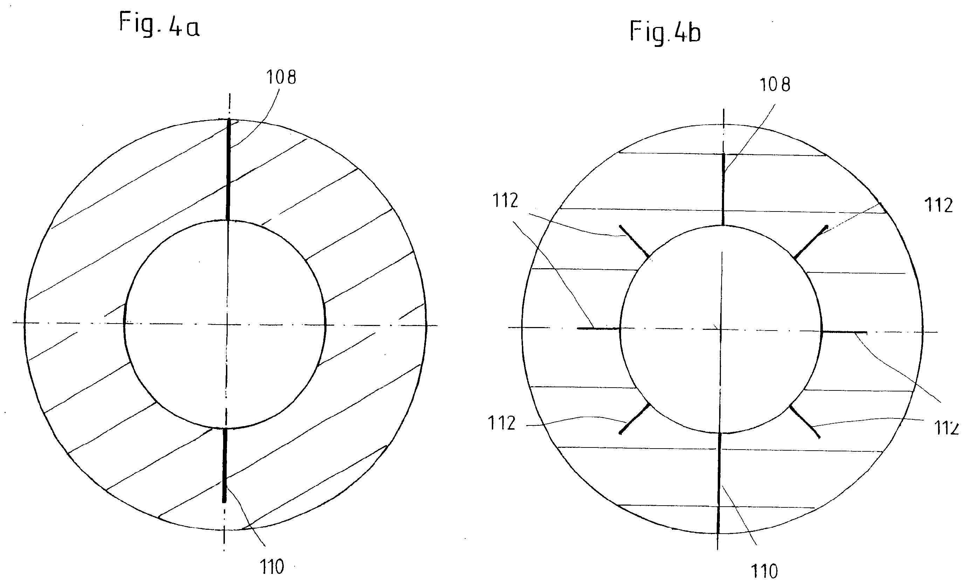

Fig. 4a zeigt eine Querschnittansicht eines Dämmstoffelementes, bei dem es sich um ein Dämmstoffelement gemäß einer der in den Fign. 1 bis 3 dargestellten Ausführungsformen handeln kann. Unabhängig von der Tatsache, ob das Dämmstoffelement nur eine Dämmschale oder zusätzlich eine äußere Schutzschale aufweist, ist die Wandung des hohlzylindrischen Dämmstoffelementes entlang einer Längsseite vollständig durchtrennt, was durch den Schnitt 108 angedeutet ist, und an einem dem Schnitt 108 im wesentlichen gegenüberliegenden Abschnitt des Dämmstoffelementes teilweise eingeschnitten, was durch den Schnitt 110 angedeutet ist. Aufgrund der Schnitte 108 und 110 kann das Dämmstoffelement in einfacher Art und Weise aufgeklappt werden, um ein Muffenrohr in dem Dämmstoffelement anzuordnen.

Fig. 4b zeigt eine Querschnittansicht eines alternativen Dämmstoffelementes, bei dem es sich wiederum um eines der in den Fign. 1 bis 3 dargestellten Dämmstoffelemente handeln kann. Das in Fig. 4b dargestellte Dämmstoffelement entspricht im wesentlichen dem in Fig. 4a gezeigten Dämmstoffelement. Zusätzlich zu den Schnitten 108 und 110 sind in Längsrichtung des Dämmstoffelementes weitere radiale Einschnitte 112 vorgesehen, wodurch ein Aufklappen des Dämmstoffelementes weiter erleichtert wird.

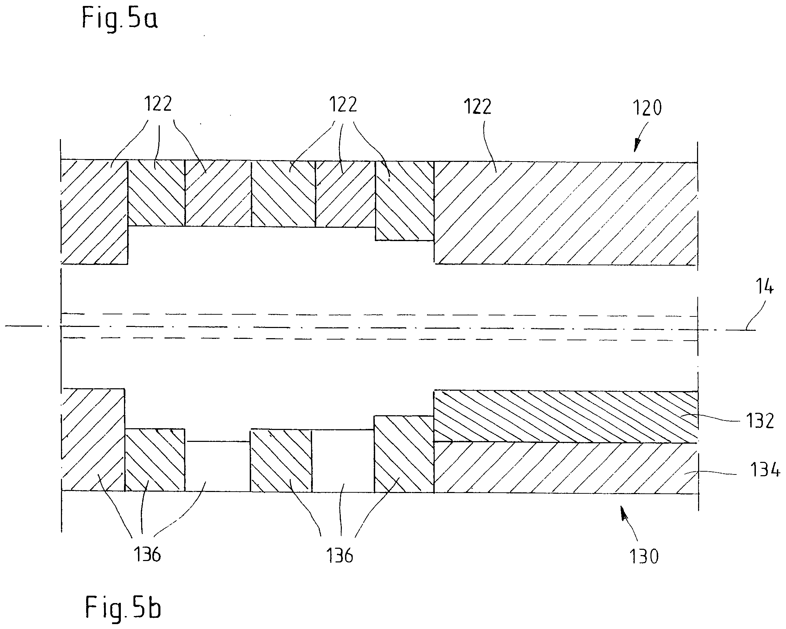

Fig. 5a zeigt eine Längsschnittansicht einer weiteren Ausführungsform eines Dämmstoffelementes 120 gemäß der vorliegenden Erfindung, das einen rotationssymmetrischen Aufbau aufweist, weshalb der Einfachheit halber nur eine Hälfte bis zur Symmetrielinie 14 dargestellt ist. Das Dämmstoffelement 120 umfaßt eine Dämmstoff aufweisende, hohlzylindrische Dämmschale 122 zur Aufnahme eines Muffenrohrs. In dem die Rohrmuffe aufnehmenden Abschnitt der Dämmschale 122 ist die Dämmschale 122 aus einzelnen Dämmstoffscheiben 124 gebildet, die axial nebeneinander angeordnet und aneinander befestigt sind, beispielsweise unter Verwendung eines geeigneten Klebstoffes. Die Innendurchmesser der Dämmstoffscheiben 124 sind zumindest teilweise voneinander verschieden, wodurch die Außenkontur der aufzunehmenden Rohrmuffe angenähert wird. Die einzelnen Dämmstoffscheiben 124 können ferner unterschiedliche Rohdichten sowie unterschiedliche Bindemittel und Bindemittelgehalte aufweisen, um auf diese Weise die Elastizität der einzelnen Dämmstoffscheiben 124 einzustellen. Zudem können einzelne oder alle Dämmstoffscheiben 124 vorgedrückt bzw. gewalkt sein, um die Festigkeit des Dämmstoffes in gewünschter Weise zu reduzieren. Um einen sicheren Anschluß an das frei Ende eines Muffenrohrs zu erzielen, weist zumindest die abschließende Dämmstoffscheibe 124 am freien Ende der Dämmschale 122 einen Innendurchmesser auf, der im wesentlichen dem Außendurchmesser des Muffenrohrendes entspricht. Ferner kann auch das Dämmstoffelement 120 Einschnitte in Längsrichtung aufweisen, wie in den Fign. 4a und 4b gezeigt ist. Fig. 5b zeigt eine Längsschnittansicht einer Ausführungsform eines Dämmstoffelementes 130, das in dem das Rohr eines Muffenrohrs aufnehmenden Abschnitt ein zweiteiligen Aufbau aufweist, nämlich eine Dämmstoff aufweisende, hohlzylindrische innere Dämmschale 132 und eine Dämmstoff aufweisende, hohlzylindrische äußere Schutzschale 134, welche die Dämmschale 132 umgibt und an dieser befestigt sein kann. Die Dämmstoffe der Dämmschale 132 und der äußeren Schutzschale 134 können voneinander verschieden und somit an den entsprechenden Verwendungszweck angepaßt sein.

Der die Rohrmuffe aufnehmende Dämmschalenabschnitt des in Fig. 5b dargestellten Dämmstoffelementes 130 ist wiederum durch axial nebeneinander angeordnete und aneinander befestigte Dämmstoffscheiben 136 gebildet, die unterschiedliche Innendurchmesser aufweisen und somit an die Außenkontur der aufzunehmenden Rohrmuffe zumindest teilweise angepaßt sind. Die einzelnen Dämmstoffscheiben 136 können voneinander verschiedene Rohdichten. Bindemittel und Bindemittelgehalte aufweisen, um die Festigkeiten der einzelnen Dämmstoffscheiben 136 einzustellen. Die einzelnen Dämmstoffscheiben 136 können gegebenenfalls vorgewalkt werden. Um einen sicheren Anschluß an das freie Ende eines Muffenrohrs zu erreichen, weist auch hier zumindest die abschließende Dämmstoffscheibe 136 am freien Ende des Dämmstoffelementes 130 einen Innendurchmesser auf, der dem entsprechenden Außendurchmesser der Rohrmuffe entspricht.

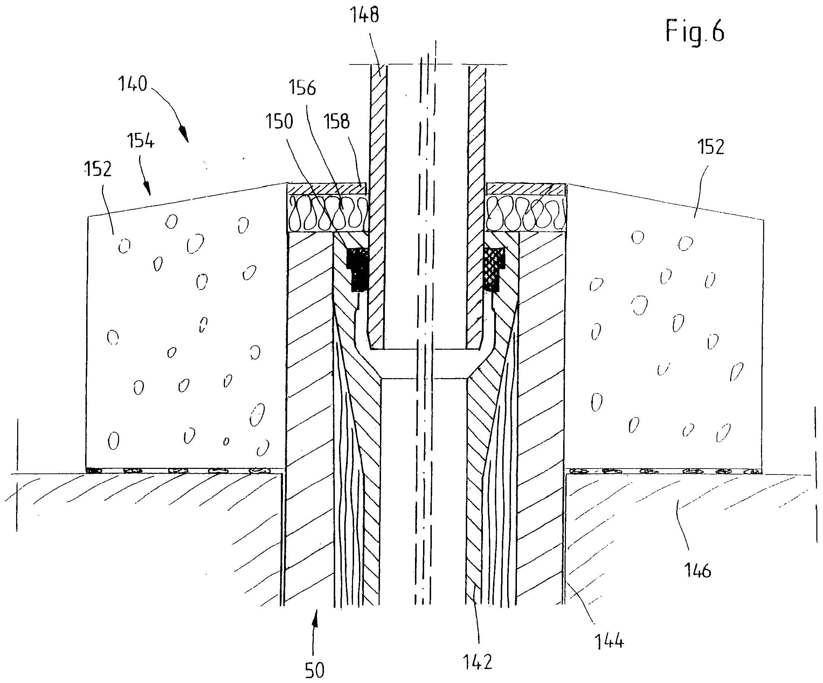

Fig. 6 zeigt eine Schnittansicht einer erfindungsgemäßen Wanddurchführung am Beispiel einer Deckendurchführung. Wie in Fig. 6 gezeigt ist, ist ein Dämmstoffelement 50 gemäß Fig. 2a, in das ein Muffenrohr 142 eingesetzt ist, durch eine zylindrische Öffnung 144 einer Decke 146 derart geführt, daß es ein Stück weit von der Decke 146 aufwärts vorsteht. Das Dämmstoffelement 50 wurde unter Bezugnahme auf Fig. 2a bereits ausführlich beschrieben, weshalb hierauf nachfolgend nicht näher eingegangen werden soll. In das freie Ende des Muffenrohrs 142 ist eine Abwasserleitung 148 eingesetzt, die über eine in der Rohrmuffe des Muffenrohrs 142 vorgesehene Ringdichtung 150 entlang ihres Außenumfangs abgedichtet wird. Um den Außenumfang des von der Decke 146 vorstehenden Abschnitts des Dämmstoffelementes 50 sind einzelne Formstücke 152 angeordnet und miteinander verklebt sowie auf die Decke 146 aufgeklebt. Die Formstücke 152 bilden zusammen ein Formteil 154 mit rechteckigem Außenumfang und einer im wesentlichen mittig angeordneten runden Durchgangsöffnung, durch die sich der von der Decke 146 vorstehende Abschnitt des Dämmstoffelementes 50 erstreckt. Die einzelnen Formstücke 152 können aus Beton, Porenbeton, Sinterglas, Schaumglas oder dergleichen hergestellt sein. Sie können gegebenenfalls mit einer haftvermittelnden Schicht zum Ankleben von Fliesen oder zum Auftrag einer Farbbeschichtung versehen sein. Das erzeugte Formteil 154 dient im wesentlichen dazu, den über die Decke 146 überstehenden Abschnitt des Dämmstoffelementes 50 vor äußeren Beschädigungen oder gegen das Einlaufen und die Durchfeuchtung von Reinigungswasser zu schützen. Der Zwischenraum zwischen dem Formteil 154 und angrenzenden Raumwänden kann gegebenenfalls mit Mörtel aufgefüllt werden. Bei entsprechender Abfasung der unteren Ecken des Formteils 154 bzw. der einzelnen Formstücke 152 können zusätzlich Dichtstoffe zwischen der Decke 146 und dem Formteil 154 eingebracht werden, was in Fig. 6 jedoch nicht gezeigt ist. Das Dämmstoffelement 50 wird an seinem freien Ende ebenso wie das freie Ende des in diesem aufgenommenen Muffenrohrs 142 nach oben hin durch eine aufklappbare Dämmstoffscheibe 156 und feste Formteile 158 abgeschlossen. Die Dämmstoffscheibe 156 kann beispielsweise aus Mineralwolle ausgebildet sein. Die festen Formteile 158 können vorteilhaft streichfähig imprägniert werden.

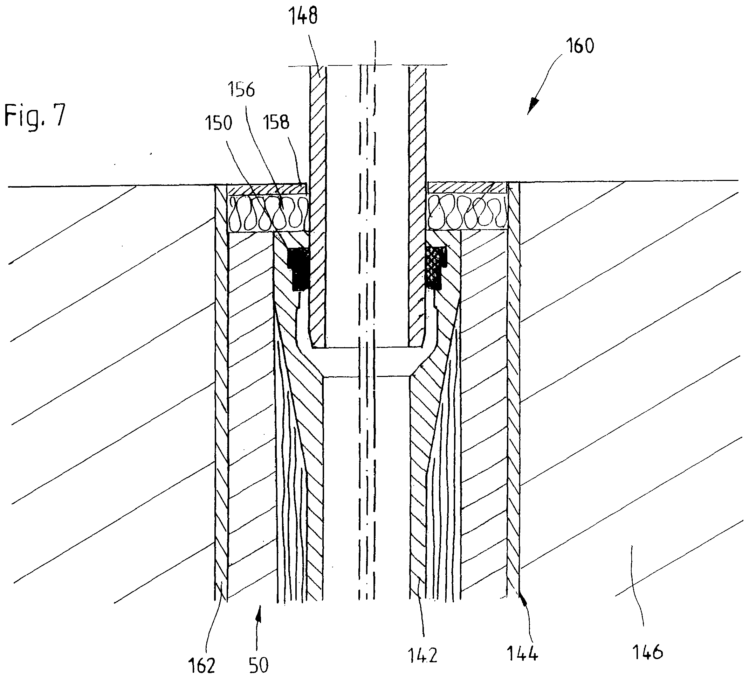

Fig. 7 zeigt eine Schnittansicht einer weiteren erfindungsgemäßen Wanddurchführung am Beispiel einer Deckendurchführung. Wie in Fig. 7 gezeigt ist, ist ein Dämmstoffelement 50, in das ein Muffenrohr 142 eingesetzt ist, durch eine mit einer feuerfesten Auskleidung 162 versehene zylindrische Öffnung 144 einer Decke 146 derart geführt, daß es ein Stück weit vor dem Austritt aus der Decke 146 endet. Das Dämmstoffelement 50 wurde zuvor bereits ausführlich beschrieben, weshalb hierauf nachfolgend nicht näher eingegangen wird. Bei der feuerfesten Schicht 142 kann es sich beispielsweise um eine Mörtelschicht handeln. Durch die feuerfeste Schicht 162 wird die Laibung der zylindrischen Öffnung 144 sehr gleichmäßig gestaltet, so daß das Dämmstoffelement 50 zusammen mit dem in diesem aufgenommenen Muffenrohr 142 in einfacher Art und Weise einsetzbar ist. In das freie Ende des Muffenrohrs 142 ist eine Abwasserleitung 148 eingesetzt, die über eine in der Rohrmuffe des Muffenrohrs 142 vorgesehene Ringdichtung 150 entlang ihres Außenumfangs abgedichtet wird. Das Dämmstoffelement 50 wird an seinem freien Ende ebenso wie das freie Ende des in diesem aufgenommenen Muffenrohrs 142 nach oben hin durch eine aufklappbare Dämmstoffscheibe 156 und feste Formteile 158 abgeschlossen, wobei die aufwärts weisenden Oberflächen der festen Formteile 158 auf gleichem Niveau mit der Oberseite der Decke 146 angeordnet sind. Die Dämmstoffscheibe 156 kann beispielsweise aus Mineralwolle ausgebildet sein. Die festen Formteile 158 können vorteilhaft streichfähig imprägniert sein, um das Eindringen von Feuchtigkeit in Richtung des Dämmstoffelementes 50 zu verhindern.

Es sollte klar sein, daß die zuvor beschriebenen Ausführungsformen nicht einschränkend sind. Vielmehr sind Modifikationen und Änderungen möglich, ohne den Schutzbereich der vorliegenden Erfindung zu verlassen, der durch die beiliegenden Ansprüche definiert ist. Ferner sei darauf hingewiesen, daß sich die vorliegende Erfindung nicht nur auf Wanddurchführung mit Dämmstoffelemente zur Aufnahme von Muffenrohren bezieht, wie es in den Ausführungsbeispielen beschrieben ist, sondern allgemein auf Wanddurchführung mit Dämmstoffelemente zur Aufnahme von Rohrleitungsabschnitten mit erweitertem Außendurchmesser, wie beispielsweise Verbindungselemente zum Verbinden von Rohren, Ventile, Anschlußstücke oder dergleichen.

### Bezugszeichenliste

- 10: Dämmstoffelement
- 12: Muffenrohr
- 14: Symmetrieachse
- 16: Dämmschale
- 18: Außenfläche
- 20: Innenfläche
- 22: Rohrmuffe
- 24: Schutzschicht
- 26: gestrichelte Linie
- 28: Formstück
- 30: Dämmstoffelement
- 32: Dämmschale
- 34: Außenfläche
- 36: Innenfläche
- 38: äußere Schutzschale
- 40: Klebeverbindungen
- 42: vorstehender Abschnitt
- 50: Dämmstoffelement
- 52: Dämmschale
- 54: äußere Schutzschale
- 56: freies Ende
- 58: freies Ende
- 60: freies Ende
- 62: freies Ende
- 64: Schutzschicht
- 70: Dämmstoffelement
- 72: Dämmschale
- 74: äußere Schutzschale
- 76: freies Ende
- 78: freies Ende
- 80: freies Ende
- 82: freies Ende
- 84: Imprägnierung
- 90: Dämmstoffelement
- 92: Dämmschale
- 94: Außenfläche
- 96: Innenfläche
- 98: Ausnehmungen
- 100: Dämmstoffelement
- 102: Dämmschale
- 104: äußere Schutzschale
- 106: Dämmstoffscheiben
- 108: Schnitt
- 110: Schnitt
- 112: Schnitt
- 120: Dämmstoffelement
- 122: Dämmschale
- 124: Dämmstoffscheiben
- 130: Dämmstoffelement
- 132: Dämmschale
- 134: äußere Schutzschale
- 136: Dämmstoffscheiben
- 140: Brandabschottung
- 142: Muffenrohr
- 144: Öffnung
- 146: Decke
- 148: Abwasserleitung
- 150: Ringdichtung
- 152: Formstücke
- 154: Formteil
- 156: Dämmstoffscheibe
- 158: feste Formteile
- 160: Brandabschottung
- 162: feuerfeste Schicht

## Patentansprüche

1. Wanddurchführung für die Anordnung in einer zumindest eine Laibung ausbildenden Durchgangsöffnung (144) einer Gebäudewandung (146), bestehend aus einem Dämmstoffelement (10; 30; 50; 70; 90; 100; 120; 130) und einer, einen Abschnitt (22) mit erweitertem Außendurchmesser aufweisenden Leitung, wobei das Dämmstoffelement (10; 30; 50; 70; 90; 100; 120; 130) eine Dämmschale (16; 32; 52; 72; 92; 102; 122; 132) aus Mineralfasern aufweist, die die Leitung zumindest im Bereich der Durchgangsöffnung (144) ummantelt und einen Hohlraum zur Aufnahme des Abschnitts (22) mit erweitertem Außendurchmesser aufweist, wobei der Durchmesser des Dämmstoffelements (10; 30; 50; 70; 90; 100; 120; 130) im Wesentlichen dem Innendurchmesser der Durchgangsöffnung (144) entspricht,
**dadurch gekennzeichnet,**
**dass** die Dämmschale (16; 32; 52; 72; 92; 102; 122; 132) einen Dämmstoffbereich aufweist, der zumindest den Abschnitt (22) mit erweitertem Außendurchmesser aufnimmt und derart flexibel ausgebildet ist, dass sich dieser Dämmstoffbereich an die Außenkontur des Abschnitts (22) mit erweitertem Außendurchmesser anpasst und an dieser anliegt.

2. Wanddurchführung für die Anordnung in einer zumindest eine Laibung ausbildenden Durchgangsöffnung (144) einer Gebäudewandung, bestehend aus einem Dämmstoffelement (10; 30; 50; 70; 90; 100; 120; 130) und einer, einen Abschnitt (22) mit erweitertem Außendurchmesser aufweisenden Leitung, wobei das Dämmstoffelement (10; 30; 50; 70; 90; 100; 120; 130) eine Dämmschale (16; 32; 52; 72; 92; 102; 122; 132) aus Mineralfasern aufweist, die die Leitung zumindest im Bereich der Durchgangsöffnung (144) ummantelt und einen Hohlraum zur Aufnahme des Abschnitts (22) mit erweitertem Außendurchmesser aufweist, wobei der Durchmesser des Dämmstoffelements (10; 30; 50; 70; 90; 100; 120; 130) im Wesentlichen dem Innendurchmesser der Durchgangsöffnung (144) entspricht,
**dadurch gekennzeichnet,**
**dass** die Dämmschale (16; 32; 52; 72; 92; 102; 122; 132) einen Dämmschalenabschnitt mit einer Innenkontur aufweist, der der Außenkontur des aufzunehmenden Abschnitts (22) mit erweitertem Außendurchmesser entspricht und formschlüssig an der Außenkontur des aufzunehmenden Abschnitts (22) mit erweitertem Außendurchmesser anliegt.

3. Wanddurchführung nach Anspruch 1 oder 2, **dadurch gekennzeichnet, daß** die Laibung mit einer feuerfesten Schicht (162) ausgekleidet ist.

4. Wanddurchführung nach Anspruch 1 oder 2, **dadurch gekennzeichnet, daß** das Dämmstoffelement (10; 30; 50; 70; 90; 100; 120; 130) einen gegenüber dem Durchmesser der Durchgangsöffnung (144) geringfügig größeren Außendurchmesser aufweist.

5. Wanddurchführung nach Anspruch 1 oder 2, **dadurch gekennzeichnet, daß** das Dämmstoffelement (10; 30; 50; 70; 90; 100; 120; 130) dichtend an der Leitung anliegt.

6. Wanddurchführung nach Anspruch 1 oder 2, **dadurch gekennzeichnet, daß** die Stirnseite zumindest eines freien Endes des Dämmstoffelementes (10; 30; 50; 70; 90; 100; 120; 130) sowie die Stirnseite der in dem Dämmstoffelement (10; 30; 50; 70; 90; 100; 120; 130) angeordneten Leitung mit einer Dämmstoffscheibe (156) abgedeckt sind.

7. Wanddurchführung nach Anspruch 1 oder 2, **dadurch gekennzeichnet, daß** das Dämmstoffelement (10; 30; 50; 70; 90; 100; 120; 130) eine Länge aufweist, die im wesentlichen mit der Länge der Durchgangsöffnung (144) übereinstimmt.

8. Wanddurchführung nach Anspruch 1 oder 2, **dadurch gekennzeichnet, daß** das Dämmstoffelement (10; 30; 50; 70; 90; 100; 120; 130) eine größere Länge als die Durchgangsöffnung (144) aufweist, so daß ein Dämmstoffelementabschnitt zumindest einseitig von der Durchgangsöffnung (144) vorsteht.

9. Wanddurchführung nach Anspruch 8, **dadurch gekennzeichnet, daß** um den vorstehenden Dämmstoffelementabschnitt Formteile (154) angeordnet sind, die den Dämmstoffelementabschnitt im wesentlichen bündig umschließen.

10. Wanddurchführung nach Anspruch 9, **dadurch gekennzeichnet, daß** die Formteile (154) aus einem stabilen, nicht brennbaren Material bestehen, beispielsweise Beton, Porenbeton, Sinterglas oder Schaumglas.

11. Wanddurchführung nach Anspruch 9 oder 10, **dadurch gekennzeichnet, daß** die Formteile (154) miteinander und/oder mit der Gebäudewandung verklebt sind.

12. Wanddurchführung nach Anspruch 2, **dadurch gekennzeichnet, daß** Durchmesserbereiche der Innenkontur des den Leitungsabschnitt (22) aufnehmenden Dämmschalenabschnitts geringfügig kleiner als die entsprechenden Außendurchmesserbereiche der Außenkontur des aufzunehmenden Leitungsabschnitts (22) sind.

13. Wanddurchführung nach Anspruch 1 oder 2, **dadurch gekennzeichnet, daß** ein Außenumfang der Dämmschale (16, 32, 52, 72, 92, 102, 122, 132) mit einer ein- oder mehrlagigen Schutzschicht (24) umgeben ist.

14. Wanddurchführung nach Anspruch 1, **dadurch gekennzeichnet, daß** der Dämmstoffbereich gewalkt ist.

15. Wanddurchführung nach Anspruch 1 oder 14, **dadurch gekennzeichnet, daß** der Dämmstoffbereich Mineralfasern umfaßt, die im wesentlichen parallel zur Längsachse des bestimmungsgemäß aufgenommenen Leitungsabschnitts (22) verlaufend ausgerichtet sind.

16. Wanddurchführung nach Anspruch 1, **dadurch gekennzeichnet, daß** der Dämmstoffbereich wenigstens einen sich radial erstreckenden Einschnitt (98) aufweist.

17. Wanddurchführung nach Anspruch 1, **dadurch gekennzeichnet, daß** der Dämmstoffbereich aus mehreren ringförmigen, in axialer Richtung nebeneinander angeordneten Segmenten (106; 122; 136) gebildet ist.

18. Wanddurchführung nach Anspruch 17, **dadurch gekennzeichnet, daß** die Segmente (122; 136) unterschiedliche Innendurchmesser aufweisen.

19. Wanddurchführung nach einem der Ansprüche 17 oder 18, **dadurch gekennzeichnet, daß** die Segmente (106; 122; 136) unterschiedliche Festigkeiten aufweisen.

20. Wanddurchführung nach Anspruch 1 oder 2, **dadurch gekennzeichnet, daß** die Dämmschale (32; 52; 72; 102; 132) in einem Hohlraum einer äußeren, einen Dämmstoff aufweisenden Schutzschale (38; 54; 74; 104; 134) angeordnet ist, wobei der Dämmstoff vorzugsweise aus Mineralfasern ausgebildet ist.

21. Wanddurchführung nach Anspruch 20, **dadurch gekennzeichnet, daß** ein Außenumfang der äußeren Schutzschale (54; 74) mit einer ein- oder mehrlagigen Schutzschicht umgeben ist.

22. Wanddurchführung nach Anspruch 20 oder 21, **dadurch gekennzeichnet, daß** der Dämmstoff der äußeren Schutzschale (38; 54; 74; 104; 134) höhere Gehalte an organischen Bindemitteln als der Dämmstoff der den Leitungsabschnitt (22) aufnehmenden Dämmschale (32; 52; 72; 102; 132) aufweist.

23. Wanddurchführung nach Anspruch 20, **dadurch gekennzeichnet, daß** die Dämmschale (32; 52; 72; 102; 132) und die äußere Schutzschale (38; 54; 74; 104; 134) aneinander befestigt sind.

24. Wanddurchführung nach Anspruch 20, **dadurch gekennzeichnet, daß** entweder die äußere Schutzschale (38; 54; 74; 104; 134) in axialer Richtung des aufzunehmenden Leitungsabschnitts über die Dämmschale (32; 52; 72; 102; 132) vorsteht oder die Dämmschale (32; 52; 72; 102; 132) in axialer Richtung des aufzunehmenden Leitungsabschnitts über die äußere Schutzschale (38; 54; 74; 104; 134) vorsteht.

25. Wanddurchführung nach Anspruch 20, **dadurch gekennzeichnet, daß** die Mineralfasern der äußeren Schutzschale (38; 54; 74; 104; 134) im wesentlichen in radialer Richtung des Dämmstoffelementes (30; 50; 70; 100; 130) ausgerichtet sind.

26. Wanddurchführung nach Anspruch 1, 2 oder 20, **dadurch gekennzeichnet, daß** die Dämmschale (16; 32; 52; 72; 92; 102; 122; 132) und/oder die äußere Schutzschale (32; 52; 72; 102; 132) aufklappbar ausgebildet sind.

## Claims

1. Wall leadthrough for arranging in a passage opening (144) of a building wall (146) forming at least one intrados consisting in an insulating material element (10; 30; 50; 70; 90; 100; 120; 130) and a line that has a portion (22) with an enlarged diameter, whereby the insulating material element (10; 30; 50; 70; 90; 100; 120; 130) has an insulating shell (16; 32; 52; 72; 92; 102; 122; 132) made of mineral fibers that sheathes the line at least in the area of the passage opening (144) and has a hollow space for receiving the portion (22) with an enlarged diameter, whereby the diameter of the insulating material element (10 ; 30 ; 50 ; 70 ; 90 ; 100 ; 120 ; 130) substantially corresponds to the inner diameter of the passage opening (144),
**characterized in that** the insulating shell (16; 32; 52; 72; 92; 102; 122; 132) has an insulating material area that receives at least the portion (22) with an enlarged diameter and is configured so flexible that this insulating material area adapts itself to the outer contour of the portion (22) with an enlarged outer diameter and rests thereon.

2. Wall leadthrough for arranging in a passage opening (144) of a building wall (146) forming at least one intrados consisting in an insulating material element (10; 30; 50; 70; 90; 100; 120; 130) and a line that has a portion (22) with an enlarged diameter, whereby the insulating material element (10; 30; 50; 70; 90; 100; 120; 130) has an insulating shell (16; 32; 52; 72; 92; 102; 122; 132) made of mineral fibers that sheathes the line at least in the area of the passage opening (144) and has a hollow space for receiving the portion (22) with an enlarged diameter, whereby the diameter of the insulating material element (10 ; 30 ; 50 ; 70 ; 90 ; 100 ; 120 ; 130) substantially corresponds to the inner diameter of the passage opening (144),
**characterized in that** the insulating shell (16; 32; 52; 72; 92; 102; 122; 132) has an insulating shell portion with an inner contour that corresponds to the outer contour of the receiving portion (22) with an enlarged outer diameter and is positively fitted on the outer contour of the portion to be received (22) with an enlarged diameter.

3. Wall leadthrough according to claim 1 or 2, **characterized in that** the intrados is coated with a refractory layer (162).

4. Wall leadthrough according to claim 1 or 2, **characterized in that** the insulating material element (10; 30; 50; 70; 90; 100; 120; 130) has an outer diameter slightly bigger than the diameter of the passage opening (144).

5. Wall leadthrough according to claim 1 or 2, **characterized in that** the insulating material element (10; 30; 50; 70; 90; 100; 120; 130) tightly rests on the line.

6. Wall leadthrough according to claim 1 or 2, **characterized in that** the front side at least of one free end of the insulating material element (10; 30; 50; 70; 90; 100; 120; 130) as well as the front side of the line placed in the insulating material element (10; 30; 50; 70; 90; 100; 120; 130) are covered with an insulating material disk (156).

7. Wall leadthrough according to claim 1 or 2, **characterized in that** the insulating material element (10; 30; 50; 70; 90; 100; 120; 130) has a length that substantially coincides with the length of the passage opening (144).

8. Wall leadthrough according to claim 1 or 2, **characterized in that** the insulating material element (10; 30; 50; 70; 90; 100; 120; 130) has a bigger length than the passage opening (144) so that an insulating material element portion protrudes at least on one side from the passage opening (144).

9. Wall leadthrough according to claim 8, **characterized in that** moulded parts (154) that enclose the insulating material element portion are placed around the protruding insulating material element portion (154).

10. Wall leadthrough according to claim 8, **characterized in that** the moulded parts (154) are made of a stable non-flammable material, for example of concrete, cellular concrete, sinter glass or foam glass.

11. Wall leadthrough according to claim 9 or 10, **characterized in that** the moulded parts (154) are sticked together and/or with the building wall.

12. Wall leadthrough according to claim 2, **characterized in that** diameter areas of the inner contour of the insulating shell portion that receives the line portion (22) are slightly smaller than the corresponding outer diameter areas of the outer contour of the line portion to be received (22).

13. Wall leadthrough according to claim 1 or 2, **characterized in that** an outer circumference of the insulating shell (16, 32, 52, 72, 92, 102, 122, 132) is surrounded with a single layer or multi-layer protective layer (24).

14. Wall leadthrough according to claim 1, **characterized in that** the insulating material area is tumbled.

15. Wall leadthrough according to claim 1 or 14, **characterized in that** the insulating material area comprises mineral fibers that are running oriented substantially parallel to the longitudinal axis of the line portion (22) received as intended.

16. Wall leadthrough according to claim 1, **characterized in that** the insulating material area has at least one radially extending notch (98).

17. Wall leadthrough according to claim 1, **characterized in that** the insulating material area is formed from several annular segments (106; 122; 136) placed axially next to each other.

18. Wall leadthrough according to claim 17, **characterized in that** the segments (122; 136) have different inner diameters.

19. Wall leadthrough according to one of the claims 17 or 18, **characterized in that** the segments (106; 122; 136) have different consistencies.

20. Wall leadthrough according to claim 1 or 2, **characterized in that** the insulating shell (32; 52; 72; 102; 132) is placed in a hollow space of an outer protective shell (38; 54; 74; 104; 134) that has an insulating material, whereby the insulating material is preferably formed from mineral fibers.

21. Wall leadthrough according to claim 20, **characterized in that** an outer circumference of the outer protective shell (54; 74) is surrounded with a single-layer or a multiple layer protective layer.

22. Wall leadthrough according to claim 20 or 21, **characterized in that** the insulating material of the outer protective shell (38; 54; 74; 104; 134) has higher contents of organic binders than the insulating material of the insulating shell (32; 52; 72; 102; 132) that receives the line portion (22).

23. Wall leadthrough according to claim 20, **characterized in that** the insulating shell (32; 52; 72; 102; 132) and the outer protective shell (38; 54; 74; 104; 134) are fixed together.

24. Wall leadthrough according to claim 20, **characterized in that** either the outer protective shell (38; 54; 74; 104; 134) protrudes over the insulating shell (32; 52; 72; 102; 132) in axial direction of the line portion to be received, or the insulating shell (32; 52; 72; 102; 132) protrudes over the outer protective shell (38; 54; 74; 104; 134) in axial direction of the line portion to be received.

25. Wall leadthrough according to claim 20, **characterized in that** the mineral fibers of the outer protective shell (38; 54; 74; 104; 134) are oriented substantially in radial direction of the insulating material element (30; 50; 70; 100; 130).

26. Wall leadthrough according to claim 1, 2 or 20, **characterized in that** the insulating shell (18; 32; 52; 72; 92; 102; 122; 132) and/or the outer protective shell (32; 52; 72; 102; 132) are configured hinged.

## Revendications

1. Traversée murale pour la disposition dans une ouverture de passage (144) d'une paroi de bâtiment (146) qui forme au moins un intrados, qui consiste en un élément isolant (10 ; 30 ; 50 ; 70 ; 90 ; 100 ; 120 ; 130) et une conduite qui présente une portion (22) avec un diamètre extérieur élargi, cependant que l'élément isolant (10 ; 30 ; 50 ; 70 ; 90 ; 100 ; 120 ; 130) présente une coque isolante (16 ; 32 ; 52 ; 72 ; 92 ; 102 ; 12 ; 132) en fibres minérales qui enrobe la conduite au moins dans la zone de l'ouverture de passage (144) et qui présente une cavité pour recevoir la portion (22) avec un diamètre extérieur élargi, cependant que le diamètre de l'élément isolant (10 ; 30 ; 50 ; 70 ; 90 ; 100 ; 120 ; 130) correspond sensiblement au diamètre intérieur de l'ouverture de passage (144),
**caractérisée en ce que** la coque isolante (16 ; 32 ; 52 ; 72 ; 92 ; 102 ; 12 ; 132) présente une zone en matériau isolant qui reçoit au moins la portion (22) avec un diamètre extérieur élargi et qui est configurée flexible de telle manière que cette zone en matériau isolant s'adapte aux contours extérieurs de la portion (22) avec un diamètre extérieur élargi et s'appuie sur celle-ci.

2. Traversée murale pour la disposition dans une ouverture de passage (144) d'une paroi de bâtiment (146) qui forme au moins un intrados, qui consiste en un élément isolant (10 ; 30 ; 50 ; 70 ; 90 ; 100 ; 120 ; 130) et une conduite qui présente une portion (22) avec un diamètre extérieur élargi, cependant que l'élément isolant (10 ; 30 ; 50 ; 70 ; 90 ; 100 ; 120 ; 130) présente une coque isolante (16 ; 32 ; 52 ; 72 ; 92 ; 102 ; 12 ; 132) en fibres minérales qui enrobe la conduite au moins dans la zone de l'ouverture de passage (144) et qui présente une cavité pour recevoir la portion (22) avec un diamètre extérieur élargi, cependant que le diamètre de l'élément isolant (10 ; 30 ; 50 ; 70 ; 90 ; 100 ; 120 ; 130) correspond sensiblement au diamètre intérieur de l'ouverture de passage (144),
**caractérisée en ce que** la coque isolante (16 ; 32 ; 52 ; 72 ; 92 ; 102 ; 12 ; 132) présente une portion de coque isolante avec des contours intérieurs qui correspondent aux contours extérieurs de la portion à recevoir (22) avec un diamètre extérieur élargi et qui s'appuie par concordance de forme sur les contours extérieurs de la portion à recevoir (22) avec un diamètre extérieur élargi.

3. Traversée murale selon la revendication 1 ou 2, **caractérisée en ce que** l'intrados est revêtu d'une couche réfractaire (162).

4. Traversée murale selon la revendication 1 ou 2, **caractérisée en ce que** l'élément isolant (10 ; 30 ; 50 ; 70 ; 90 ; 100 ; 120 ; 130) présente un diamètre légèrement plus grand que le diamètre de l'ouverture de passage (144).

5. Traversée murale selon la revendication 1 ou 2, **caractérisée en ce que** l'élément isolant (10 ; 30 ; 50 ; 70 ; 90 ; 100 ; 120 ; 130) s'appuie de manière étanche sur la conduite.

6. Traversée murale selon la revendication 1 ou 2, **caractérisée en ce que** le côté frontal d'au moins une extrémité libre de l'élément isolant (10 ; 30 ; 50 ; 70 ; 90 ; 100 ; 120 ; 130) ainsi que le côté frontal de la conduite placée dans l'élément isolant (10 ; 30 ; 50 ; 70 ; 90 ; 100 ; 120 ; 130) sont recouverts d'un disque en matériau isolant (156).

7. Traversée murale selon la revendication 1 ou 2, **caractérisée en ce que** l'élément isolant (10 ; 30 ; 50 ; 70 ; 90 ; 100 ; 120 ; 130) présente une longueur qui coïncide sensiblement avec la longueur de l'ouverture de passage (144).

8. Traversée murale selon la revendication 1 ou 2, **caractérisée en ce que** l'élément isolant (10 ; 30 ; 50 ; 70 ; 90 ; 100 ; 120 ; 130) présente une plus grande longueur que l'ouverture de passage (144) si bien qu'une portion de l'élément isolant fait saillie de l'ouverture de passage (144) au moins sur un côté.

9. Traversée murale selon la revendication 8, **caractérisée en ce que** des pièces moulées (154) qui entourent de manière sensiblement affleurée la portion de l'élément isolant sont placées autour de la portion de l'élément isolant qui fait saillie.

10. Traversée murale selon la revendication 9, **caractérisée en ce que** les pièces moulées (154) sont en un matériau stable, non combustible, par exemple en béton, en béton cellulaire, en verre fritté ou en verre cellulaire.

11. Traversée murale selon la revendication 9 ou 10, **caractérisée en ce que** les pièces moulées (154) sont collées l'une avec l'autre et/ou avec la paroi du bâtiment.

12. Traversée murale selon la revendication 2, **caractérisée en ce que** des zones de diamètre des contours intérieurs de la portion de coque isolante qui reçoit la portion de conduite (22) sont légèrement plus petites que les zones de diamètre extérieur correspondantes des contours extérieurs de la portion de conduite à recevoir (22).

13. Traversée murale selon la revendication 1 ou 2, **caractérisée en ce qu'**une périphérie extérieure de la coque isolante (16 ; 32 ; 52 ; 72 ; 92 ; 102 ; 12 ; 132) est entourée avec une couche de protection à une ou plusieurs couches (24).

14. Traversée murale selon la revendication 1, **caractérisée en ce que** la zone en matériau isolant est foulonnée.

15. Traversée murale selon la revendication 1 ou 14, **caractérisée en ce que** la zone en matériau isolant comprend des fibres minérales qui sont orientées sensiblement parallèlement à l'axe longitudinal de la portion de conduite (22) logée de manière conforme à l'utilisation prévue.

16. Traversée murale selon la revendication 1, **caractérisée en ce que** la zone en matériau isolant présente au moins une entaille (98) qui s'étend dans le sens radial.

17. Traversée murale selon la revendication 1, **caractérisée en ce que** la zone en matériau isolant est formée par plusieurs segments annulaires (106 ; 122 ; 136) placés l'un à côté de l'autre dans le sens axial.

18. Traversée murale selon la revendication 17, **caractérisée en ce que** les segments (122 ; 136) présentent différents diamètres intérieurs.

19. Traversée murale selon la revendication 17 ou 18, **caractérisée en ce que** les segments (100 ; 122 ; 136) présentent différentes consistances.

20. Traversée murale selon la revendication 1 ou 2, **caractérisée en ce que** la coque isolante (32 ; 52 ; 72 ; 102 ; 132) est placée dans une cavité d'une coque de protection extérieure (38 ; 54 ; 74 ; 104 ; 134) qui présente un matériau isolant, cependant que le matériau isolant est de préférence configuré en fibres minérales.

21. Traversée murale selon la revendication 20, **caractérisée en ce qu'**une périphérie extérieure de la coque de protection extérieure (54 ; 74) est entourée d'une couche de protection à une ou plusieurs couches.

22. Traversée murale selon la revendication 20 ou 21, **caractérisée** en ce le matériau isolant de la coque de protection extérieure (38 ; 54 ; 74 ; 104 ; 134) présente des teneurs en liants organiques plus élevées que le matériau isolant de la coque isolante (32 ; 52 ; 72 ; 102 ; 132) qui reçoit la portion de conduite (22).

23. Traversée murale selon la revendication 20, **caractérisée en ce que** la coque isolante (32 ; 52 ; 72 ; 102 ; 132) et la coque de protection extérieure (38 ; 54 ; 74 ; 104 ; 134) sont fixées l'une à l'autre.

24. Traversée murale selon la revendication 20, **caractérisée en ce que** soit la coque de protection extérieure (38 ; 54 ; 74 ; 104 ; 134) fait saillie au-delà de la coque isolante (32 ; 52 ; 72 ; 102 ; 132) dans le sens axial de la portion de conduite à recevoir, soit la coque isolante (32 ; 52 ; 72 ; 102 ; 132) fait saillie au-delà de la coque de protection extérieure (38 ; 54 ; 74 ; 104 ; 134) dans le sens axial de la portion de conduite à recevoir,

25. Traversée murale selon la revendication 20, **caractérisée en ce que** les fibres minérales de la coque de protection extérieure (38 ; 54 ; 74 ; 104 ; 134) sont orientées sensiblement dans le sens radial de l'élément isolant (30 ; 50 ; 70 ; 100; 130).

26. Traversée murale selon la revendication 1, 2 ou 20, **caractérisée en ce que** la coque isolante (16 ; 32 ; 52 ; 72 ; 92 ; 102 ; 233 ; 132) et/ou la coque de protection extérieure (32 ; 52 ; 72 ; 102 ; 132) sont configurées repliables.
